# FASCICULE DE BREVET EUROPEEN

(11) **EP 4 072 921 B1**
(45) Date de publication et mention de la délivrance du brevet: **17.01.2024**
(21) Numéro de dépôt: 20808496.2
(22) Date de dépôt: 30.10.2020
(51) Int. Cl.: B60W 60/00, B60W 50/14, G05D 1/00

(54) **PROCÉDÉ DE PILOTAGE D'UN VÉHICULE AUTONOME**
VERFAHREN ZUM ANTRIEB EINES AUTONOMEN FAHRZEUGS
METHOD FOR DRIVING AN AUTONOMOUS VEHICLE

(30) Priorité: 09.12.2019 FR 1913954
(43) Date de publication de la demande: 19.10.2022
(73) Titulaire: Stellantis Auto SAS, 78300 Poissy (FR)
(72) Inventeur: SIMONET, David, 75004 PARIS 04 (FR); PETIT, Francois, 75015 PARIS (FR)
(86) Numéro de dépôt international: PCT/FR2020/051966
(87) Numéro de publication internationale: WO 2021/116543

(56) Documents cités:
- DE-A1-102017 215 405
- DE-A1-102017 215 405
- FR-A1- 3 065 935
- US-A1- 2016 209 840
- US-A1- 2016 209 840
- US-A1- 2017 322 552

## Description

Le domaine technique concerne les procédés de pilotage des véhicules autonomes et les véhicules autonomes mettant en oeuvre de tels procédés. Certains véhicules automobiles, dits autonomes, disposent de plusieurs modes de conduite, dont un mode de conduite autonome dans lequel la conduite du véhicule est assurée par un ensemble de systèmes complexes reposant sur de nombreux capteurs, actionneurs et composants de supervision et un mode de conduite manuel dans lequel la conduite est assurée au moins en partie par le conducteur du véhicule.

Pendant une phase de transition entre une phase de conduite en mode autonome et une phase de conduite en mode manuel, pouvant durer plusieurs secondes, le conducteur reprend le contrôle de la conduite du véhicule, et donc l'ensemble de systèmes complexes cesse de contrôler le véhicule. De telles transitions nécessitent toujours une action du conducteur du véhicule. Ainsi, Il est connu par exemple du document FR3065935 un véhicule conçu pour passer d'un mode de conduite autonome à un mode de conduite manuel lorsque des mains sont détectées sur le volant du véhicule et que le conducteur appuie sur une pédale d'accélération ou de freinae. Les documents US 2016/209840 A1 et DE 10 2017 215405 A1 divulguent aussi des véhicules avec des procédés pour passer de la conduite autonome à une conduite manuelle.

Cependant, un tel véhicule ne permet pas de garantir que la prise en main du volant n'est pas le fait d'un passager, mettant le véhicule et ses occupants dans une situation potentiellement dangereuse pouvant conduire à une sortie du véhicule de sa voie de circulation. Dans un tel cas, il est probable que le conducteur du véhicule, surpris, appuie sur la pédale de freinage par réflexe, induisant ainsi le passage en mode manuel du véhicule. Une telle situation s'avère dangereuse et est susceptible d'occasionner une perte de contrôle du véhicule après la transition dans le mode manuel.

Afin d'éviter une situation dangereuse telle que décrite précédemment et ainsi améliorer la transition d'un véhicule du mode autonome au mode manuel, il convient d'éviter qu'un occupant autre que le conducteur (un passager) puisse déclencher ladite transition.

A cet effet, la présente invention se propose de résoudre les inconvénients cités et de mettre à disposition un nouveau procédé de pilotage, en situation de conduite, d'un véhicule automobile comportant :
- un mode autonome dans lequel le déplacement du véhicule est entièrement géré par un système automatisé du véhicule ;
- un mode manuel où un conducteur du véhicule exerce le contrôle d'au moins une partie des déplacements du véhicule en actionnant le volant ;

Le procédé comprenant les étapes successives suivantes :
- Une étape de détection de prise en main du volant consistant à utiliser des moyens de détection, lorsque véhicule est en mode autonome, pour détecter la présence d'une main d'un occupant du véhicule sur le point de saisir le volant,
- une étape d'identification consistant à utiliser des moyens d'identification pour identifier l'occupant dont la main a été détectée à l'étape de détection,
- une étape de discrimination consistant à interdire le passage du véhicule en mode manuel lorsque l'occupant dont la main a été détectée est identifié à l'étape d'identification comme étant un passager et à entrainer le passage automatique du véhicule en mode manuel lorsque l'occupant dont la main a été détectée est identifié à l'étape d'identification comme étant le conducteur.

Ainsi, lorsque le véhicule autonome se trouve en situation de conduite en mode autonome, l'intention de prendre en mains le volant du véhicule par un occupant du véhicule, détectée par l'étape de détection, va engendrer l'étape d'identification du procédé de pilotage pour identifier l'occupant ayant initié l'étape de détection. La transition du mode autonome vers le mode manuel ne pourra être initiée par l'étape de discrimination que si l'occupant est identifié comme étant le conducteur. Lors de la tentative de reprise en mains du véhicule par un passager, l'étape de discrimination du procédé de pilotage selon l'invention refusera la transition vers le mode manuel du véhicule et maintiendra le mode autonome.

Selon un mode de mise en oeuvre du procédé selon l'invention, les moyens d'identification et/ou de détection comprennent une caméra positionnée dans l'habitacle du véhicule. Une telle caméra est avantageusement une caméra du type de caméra utilisée habituellement pour détecter un défaut d'attention du conducteur, notamment une somnolence du conducteur. Ainsi, une analyse de l'image captée par la caméra permet de d'identifier la main et le bras de l'occupant et donc de d'identifier l'occupant comme étant le conducteur ou un passager.

Selon un mode de mise en oeuvre du procédé selon l'invention, l'étape d'identification consiste à identifier la présence d'un bras du passager traversant un espace situé entre le siège du conducteur et le siège du passager avant pour identifier la main détectée comme étant celle du passager.

Dans un mode de mise en oeuvre de l'invention, les moyens d'identification et ou de détection utilisent des dispositifs d'identification biométriques, notamment un détecteur d'empreinte digitale positionné sur le volant. Alternativement, les moyens de détection comportent également une caméra conçue pour détecter une main à proximité du volant, avant que celle-ci ne touche le volant. Par exemple, si une main est captée par la caméra à une distance prédéterminée du volant, la détection est considérée comme positive et l'étape d'identification est alors initialisée.

Avantageusement, l'étape de discrimination émet une notification visuelle et/ou sonore lorsque l'occupant, dont la main a été détectée, est identifié à l'étape d'identification comme étant le passager.

L'invention concerne enfin un véhicule, notamment autonome, conçu pour mettre en oeuvre le procédé selon l'invention.

L'invention sera mieux comprise à la lecture de la description détaillée qui va suivre, donnée uniquement à titre d'exemple non limitatif et faite en se référant au dessin annexé sur lequel :

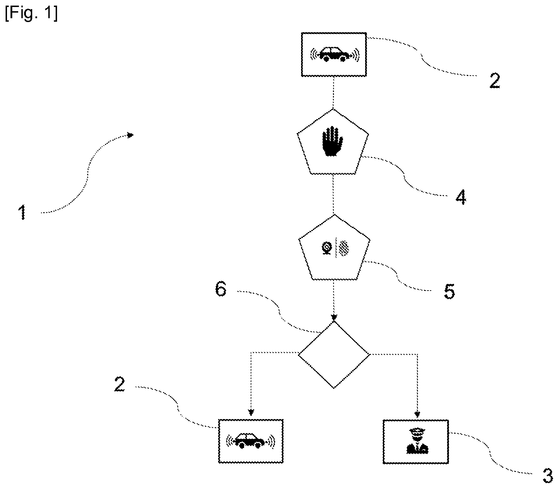

[Fig. 1] la figure 1, représente une vue schématique des étapes d'un procédé selon l'invention.

La mise en oeuvre d'un procédé 1 selon l'invention, schématisé sur la figure 1, nécessite un véhicule autonome, non illustré sur la figure, comportant, d'une part, un mode autonome 2 dans lequel le déplacement du véhicule est entièrement géré par un système automatisé du véhicule et, d'autre part, un mode manuel 3 où un conducteur du véhicule exerce le contrôle d'au moins une partie des déplacements du véhicule en actionnant au moins le volant.

Le procédé 1 nécessite en outre que le véhicule autonome se trouve en situation de conduite dans le mode autonome 2.

Le procédé 1 comprenant une étape de détection 4 de prise en main du volant consistant à utiliser des moyens de détection, lorsque véhicule est en mode autonome 2, pour détecter la présence d'une main d'un occupant du véhicule sur le point de saisir le volant. Cette étape de détection 4 est effectuée à l'aide de moyens de détection qui comportent par exemple au moins un capteur de contact, par exemple du type capacitif, pour détecter une main en contact avec le volant. De façon alternative les moyens de détection comportent, par exemple, des dispositifs d'identification biométriques, notamment un détecteur d'empreinte digitale positionné sur le volant. De façon alternative, ou en complément, les moyens d'identification comportent une caméra. Une analyse de ou des images de cette caméra permet de détecter une main à proximité du volant du véhicule, avant même que ladite main ne touche le volant. Ainsi, une main sur le point de saisir le volant est soit à proximité du volant, soit en contact avec le volant.

Cette étape de détection 4, lorsqu'une main est détectée sur le volant ou à proximité du volant, est accompagnée d'une étape d'identification 5 illustrée sur la figure 1. Cette étape d'identification 5 consiste à utiliser des moyens d'identification pour identifier l'occupant dont la main est ou a été détectée à l'étape de détection 4. Ces moyens d'identification comportent une caméra : ainsi l'analyse de ou des images de cette caméra permet d'identifier le bras de l'occupant, puis l'occupant dont la main est ou a été détectée à l'étape de détection 4. La caméra utilisée pour l'étape d'identification peut avantageusement être la caméra qui est utilisée lors de l'étape de détection 4. Avantageusement, la caméra utilisée est disposée de sorte à observer l'espace entre les deux sièges avant du véhicule, suivant l'axe longitudinal du véhicule. Dans ce mode de réalisation particulier, l'étape d'identification 5 consiste à observer la présence d'un bras et/ou d'une main dans ou traversant l'espace situé entre les deux sièges avant : un bras ou une main identifiée dans cet espace sera alors identifié comme à un passager. Alternativement, ou en complément, les moyens d'identification comportent des capteurs biométriques, par exemple du type permettant de lire l'empreinte digitale d'une main posée sur le volant pour identifier le conducteur du véhicule, dont l'empreinte aurait été préalablement enregistrée par les moyens d'identification, par exemple au moment du démarrage du véhicule. Dans ce cas, lorsque l'empreinte n'est pas reconnue, elle attribuée à un passager.

Les étapes d'identification 5 et de détection 4 sont suivies d'une étape de discrimination 6. L'étape de discrimination 6 consiste à interdire le passage du véhicule en mode manuel 3 lorsque l'occupant dont la main a été détectée est identifié à l'étape d'identification 5 comme étant un passager et à entrainer le passage automatique du véhicule en mode manuel 3 lorsque l'occupant, dont la main a été détectée, est identifié à l'étape d'identification 5 comme étant le conducteur.

Ainsi, lorsque le véhicule autonome se trouve en situation de conduite en mode autonome 2, l'intention de prendre en mains le volant du véhicule par un occupant, détectée par l'étape de détection 4, va engendrer l'étape d'identification 5 pour identifier l'occupant ayant initié l'étape de détection 4. La transition du mode autonome 2 vers le mode manuel 3 ne pourra être initiée par l'étape de discrimination 6 que si l'occupant est identifié comme étant le conducteur. Lors de la tentative de reprise en mains du véhicule par un passager, l'étape de discrimination 6 du procédé de pilotage refusera la transition vers le mode manuel 3 du véhicule qui restera en mode autonome 2. Dans ce cas le procédé selon l'invention déclenchera l'émission d'une alerte visuelle et/ou sonore. Enfin, le procédé selon l'invention est mis en oeuvre soit à la suite d'une demande du système automatisé du véhicule au conducteur de reprendre la main ou à la suite d'une initiative du conducteur.

L'invention ne se limite pas au mode de mise en oeuvre du procédé décrit ci-avant, seulement à titre d'exemple, mais d'autres modes de réalisation peuvent être conçus par l'homme de métier sans sortir du cadre et de la portée de la présente invention.

## Revendications

1. Procédé (1) de pilotage, en situation de conduite, d'un véhicule automobile comportant :
- un mode autonome (2) de conduite dans lequel le déplacement du véhicule est entièrement géré par un système automatisé du véhicule ;
- un mode manuel (3) où un conducteur du véhicule exerce le contrôle d'au moins une partie des déplacements du véhicule en actionnant le volant ;
Le procédé (1) comprenant les étapes successives suivantes :
- Une étape de détection (4) de prise en main du volant consistant à utiliser des moyens de détection, lorsque véhicule est en mode autonome (2), pour détecter la présence d'une main d'un occupant du véhicule sur le point de saisir le volant, le procédé étant **caractérisé en ce qu'**il comprend
- une étape d'identification (5) consistant à utiliser des moyens d'identification pour identifier l'occupant dont la main a été détectée à l'étape de détection (4),
- une étape de discrimination (6) consistant à interdire le passage du véhicule en mode manuel (3) lorsque l'occupant, dont la main a été détectée, est identifié à l'étape d'identification (5) comme étant un passager et à entrainer le passage automatique du véhicule en mode manuel (3) lorsque l'occupant, dont la main a été détectée, est identifié à l'étape d'identification (5) comme étant le conducteur.

2. Procédé (1) selon la revendication 1, **caractérisé en ce que** les moyens d'identification et/ou de détection comprennent une caméra positionnée dans l'habitacle du véhicule.

3. Procédé (1) selon la revendication 1 ou 2, **caractérisé en ce que** l'étape d'identification (5) consiste à identifier la présence d'un bras du passager traversant un espace situé entre le siège du conducteur et le siège du passager avant, pour identifier la main détectée comme étant celle du passager.

4. Procédé (1) selon l'une des revendications 1 à 3, **caractérisé en ce que** les moyens d'identification et ou de détection utilisent des dispositifs d'identification biométriques, notamment un détecteur d'empreinte digitale positionné sur le volant.

5. Procédé (1) selon l'une des revendications 1 à 4, **caractérisé en ce que** l'étape de discrimination (6) émet une notification visuelle et/ou sonore lorsque l'occupant, dont la main a été détectée, est identifié à l'étape d'identification (5) comme étant le passager.

6. Véhicule, notamment autonome, conçu pour mettre en oeuvre le procédé (1) selon l'une des revendications 1 à 5.

## Patentansprüche

1. Verfahren (1) zum Steuern eines Kraftfahrzeugs in einer Fahrsituation, umfassend:
- einen autonomen Fahrmodus (2), in dem die Bewegung des Fahrzeugs vollständig von einem automatisierten Fahrzeugsystem verwaltet wird;
- einen manuellen Modus (3), in dem ein Fahrer des Fahrzeugs durch Betätigung des Lenkrads die Kontrolle über zumindest einen Teil der Fahrzeugbewegungen ausübt;
Das Verfahren (1) umfasst die folgenden aufeinanderfolgenden Schritte:
- einen Schritt (4) zur Erkennung des Lenkradgriffs, der darin besteht, mithilfe von Erkennungsmitteln, wenn sich das Fahrzeug im autonomen Modus (2) befindet, das Vorhandensein einer Hand eines Fahrzeuginsassen zu erkennen, der gerade dabei ist, das Lenkrad zu greifen,
wobei das Verfahren **dadurch gekennzeichnet ist, dass** es Folgendes umfasst:
- einen Identifizierungsschritt (5), der darin besteht, mithilfe von Identifizierungsmitteln den Insassen zu identifizieren, dessen Hand im Erkennungsschritt (4) erkannt wurde,
- einen Diskriminierungsschritt (6), der darin besteht, die Durchfahrt des Fahrzeugs im manuellen Modus (3) zu verbieten, wenn der Insasse, dessen Hand erkannt wurde, im Identifizierungsschritt (5) als Passagier identifiziert wurde, und das Fahrzeug dazu zu veranlassen, dies zu tun automatisch in den manuellen Modus (3) wechseln, wenn der Insasse, dessen Hand erkannt wurde, im Identifizierungsschritt (5) als Fahrer identifiziert wird.

2. Verfahren (1) nach Anspruch 1, **dadurch gekennzeichnet, dass** die Identifikations- und/oder Erkennungsmittel eine im Fahrgastraum des Fahrzeugs positionierte Kamera umfassen.

3. Verfahren (1) nach Anspruch 1 oder 2, **dadurch gekennzeichnet, dass** der Identifizierungsschritt (5) darin besteht, die Anwesenheit eines Beifahrerarms zu identifizieren, der einen Raum zwischen dem Fahrersitz und dem Sitz des Beifahrers überquert, um ihn zu identifizieren Hand als die des Passagiers erkannt.

4. Verfahren (1) nach einem der Ansprüche 1 bis 3, **dadurch gekennzeichnet, dass** die Identifikations- und/oder Erkennungsmittel biometrische Identifikationsgeräte, insbesondere einen am Lenkrad positionierten Fingerabdruckdetektor, verwenden.

5. Verfahren (1) nach einem der Ansprüche 1 bis 4, **dadurch gekennzeichnet, dass** der Diskriminierungsschritt (6) eine visuelle und/oder akustische Benachrichtigung ausgibt, wenn der Insasse, dessen Hand erkannt wurde, im Identifizierungsschritt (5) identifiziert wird) als Passagier.

6. Fahrzeug, insbesondere autonom, ausgelegt zur Durchführung des Verfahrens (1) nach einem der Ansprüche 1 bis 5.

## Claims

1. Method (1) for controlling, in a driving situation, a motor vehicle comprising:
- an autonomous driving mode (2) in which the movement of the vehicle is entirely managed by an automated vehicle system;
- a manual mode (3) where a driver of the vehicle exercises control of at least part of the vehicle's movements by operating the steering wheel;
The method (1) comprising the following successive steps:
- A steering wheel grip detection step (4) consisting of using detection means, when the vehicle is in autonomous mode (2), to detect the presence of a hand of a vehicle occupant about to grab the steering wheel,
the process being **characterized in that** it comprises
- an identification step (5) consisting of using identification means to identify the occupant whose hand was detected in the detection step (4),
- a discrimination step (6) consisting of prohibiting the passage of the vehicle in manual mode (3) when the occupant, whose hand has been detected, is identified in the identification step (5) as being a passenger and to cause the vehicle to automatically switch to manual mode (3) when the occupant, whose hand has been detected, is identified in the identification step (5) as being the driver.

2. Method (1) according to claim 1, **characterized in that** the identification and/or detection means comprise a camera positioned in the passenger compartment of the vehicle.

3. Method (1) according to claim 1 or 2, **characterized in that** the identification step (5) consists of identifying the presence of a passenger arm crossing a space located between the driver's seat and the seat of the front passenger, to identify the hand detected as that of the passenger.

4. Method (1) according to one of claims 1 to 3, **characterized in that** the identification and/or detection means use biometric identification devices, in particular a fingerprint detector positioned on the steering wheel.

5. Method (1) according to one of claims 1 to 4, **characterized in that** the discrimination step (6) emits a visual and/or audible notification when the occupant, whose hand has been detected, is identified in the identification step (5) as being the passenger.

6. Vehicle, in particular autonomous, designed to implement the method (1) according to one of claims 1 to 5.
